# EUROPEAN PATENT APPLICATION

(11) **EP 4 832 410 A1**
(43) Date of publication of application: **28.10.2026**
(21) Application number: 25172284.9
(22) Date of filing: 24.04.2025
(51) Int. Cl.: H04L 9/08, G06N 20/00

(54) **ARTIFICIAL INTELLIGENCE-BASED DYNAMIC ADAPTATION IN QUANTUM KEY DISTRIBUTION WITHIN TELECOMMUNICATION NETWORKS**

(71) Applicant: Deutsche Telekom AG, 53113 Bonn (DE)
(72) Inventor: Sid Ali, Badie, Bonn (DE)
(74) Representative: karo IP

(57) **Abstract**

A computer-implemented method for performing quantum key distribution, QKD, in a telecommunication network between a first communication device and a second communication device, the method comprising:
(a) measuring or monitoring, by a monitoring entity, quantum link values of a QKD process carried out with a first set of QKD operational parameters;
(b) detecting, by an analytics entity, based on the monitored quantum link values, one or more operational conditions selected from: a condition, in particular a degradation, of the quantum link, a threat to the QKD, or a mobility event affecting a QKD communication party;
(c) providing, in response to the detected at least one operational condition, at least a subset of the monitored quantum link values to a dynamic-adaptation-module, a threat-detection-module, a rerouting-module, or a hierarchical-control-module one or all of the modules are implemented within an adaptive-QKD node;
(d) determining, by one or more of the modules, a second set of QKD operational parameters based on a one or more machine learning models trained on quantum link data and at least a subset of the quantum link values as input;
(e) applying, by an operational module configured to interface with QKD hardware, the second set of QKD operational parameters to adjust the QKD process,
wherein the second set of QKD operational parameters enables QKD to be maintained or improved.

## Description

The present invention relates to quantum key distribution (QKD) in telecommunication networks and, more particularly, to a system and method for dynamically adapting QKD operational parameters using artificial intelligence (AI), including mechanisms for threat detection, rerouting, and optimization in distributed network environments.

Quantum Key Distribution (QKD) is a cryptographic method for securely distributing encryption keys based on the principles of quantum mechanics. In a typical QKD protocol, such as BB84, a sender (commonly referred to as "Alice") transmits a series of quantum states-usually in the form of polarized photons-to a receiver ("Bob") over a quantum channel. Each quantum state encodes a bit of the encryption key. The polarization basis used for each photon is randomly selected from two non-orthogonal sets. The receiver likewise selects a measurement basis at random. After transmission, Alice and Bob communicate over a classical public channel to compare their respective basis choices. Only the bits where both parties used matching bases are retained to form the raw key. This key is then subjected to error correction and privacy amplification procedures to generate a final shared secret key. Due to the no-cloning theorem and the collapse of quantum states upon measurement, any attempt by a third party (e.g., an eavesdropper) to intercept or observe the quantum transmission introduces detectable anomalies. Thus, QKD provides a mechanism for secure key exchange with provable resistance to interception.

QKD enables secure communication by using the principles of quantum mechanics to exchange encryption keys. Among the most widely used protocols is the BB84 protocol, which transmits keys through the use of polarized photons. This protocol ensures that any attempt to intercept the communication introduces measurable disturbances, thereby preserving security.

Despite their theoretical robustness with respect to security aspects, current QKD systems exhibit significant limitations in real-world applications. These systems are typically static in configuration and operate under controlled environmental conditions. They require precise optical alignment and are sensitive to factors such as temperature fluctuations, mechanical vibrations, and signal degradation. As a result, they are often deployed only in laboratory-like or highly controlled field environments.

In practical deployments, QKD is generally limited to point-to-point links between fixed nodes. This architecture makes it difficult to scale QKD into broader network contexts, such as those envisioned for 5G and/or 6G infrastructures. The complexity of managing multiple quantum channels, combined with sensitivity to environmental noise, presents a major technical barrier.

Moreover, conventional QKD systems rely heavily on manual configuration. Engineers must manually tune system parameters to accommodate signal loss, channel stability, or error rates. This manual optimization process is time-consuming, difficult to reproduce, and prone to human error.

Current systems also lack the ability to dynamically adapt to changes in network conditions. Additionally, problems with respect to integrating QKD into large-scale telecommunication networks with concurrent quantum links are not yet solved.

Therefore, it is the task of the invention to at least partially overcome the limitations of the state-of-the-art.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

According to a first aspect of the invention, a computer-implemented method for performing quantum key distribution, QKD, in a telecommunication network between a first communication device and a second communication device is provided, the method comprises:
(a) measuring and/or monitoring, by a monitoring entity, quantum link values of a QKD process carried out with a first set of QKD operational parameters;
(b) detecting, by an analytics entity, based on the monitored quantum link values, one or more operational conditions selected from: a condition, in particular a degradation, of the quantum link, a threat to the QKD, and/or a mobility event affecting a QKD communication party;
(c) providing, in response to the detected at least one operational condition, at least a subset of the monitored quantum link values to a dynamic-adaptation-module, a threat-detection-module, a rerouting-module, and/or a hierarchical-control-module of an adaptive-QKD node; in an embodiment, the dynamic-adaptation-module can trigger the rerouting-module so that a new communication path (based on new routing parameters) yields in a more efficient QKD process. In particular, the routing parameters can list the network nodes over which the keys shall be transmitted. In an embodiment, if new routing parameters are sent they can be handed over to the threat-detection-module in order to detect if the new communication path is subjected to attacks or not. If the threat-detection-module determines that the new path is under attack or is frequently being attacked, it can trigger the recalculation of the routing parameters by the rerouting-module. The rerouting-module can be provided with the information about which network nodes have been attacked to avoid these notes when calculating the new routing parameters; a communication path can comprise at least one quantum link. The terms quantum link and quantum channel are interchangeable;
(d) determining, by one or more of the modules, a second set of QKD operational parameters based on one or more machine learning models trained on quantum link data and at least a subset of the quantum link values as input; in particular, each of the modules described above can have its own trained machine learning model that can also be described as an AI-model;
(e) applying, by an operational module configured to interface with QKD hardware, the second set of QKD operational parameters to adjust the QKD process,
wherein the second set of QKD operational parameters enables QKD to be maintained or improved.

In particular, the steps can be executed in the order (a) to (e). The telecommunication network can be a 5G and/or 6G communication network.

This method can be implemented on an AI-enhanced QKD management platform integrated within the telecommunication network, where edge devices or base stations host the various modules to decrease latency and to enforce load balancing. It is also possible to implement the QKD management platform within a server in the core network - as all communication goes through the core network. Implementing the QKD management platform into the core network seems to be the best option when putting the invention first into operation because in this case it might be sufficient to implement only one QKD management platform within the core instead of implementing multiple QKD management platforms at the various base stations right at the start. In particular, the QKD management platform within the core can always serve as a kind of backup if the counterparts implemented within edge devices are malfunctioning. Quantum link values such as quantum bit error rate (QBER), signal-to-noise ratio (SNR), latency, and photon arrival rates can be collected through sensors associated to QKD transceivers and/or can be implemented within the edge devices or base stations. The analytics entity processes these values to detect degradations in link quality, indications of security threats, or mobility events such as a handover between cells.

By selectively routing the measured data to at least one specialized AI module, the system ensures that each type of operational condition is handled by the most appropriate logic, increasing responsiveness and modularity. The use of a machine learning model trained on quantum link behavior enables intelligent adaptation beyond simple static decisions, allowing the system to proactively optimize QKD settings with respect to unknown situations.

Adjustments to QKD operational parameters-such as changing the photon emission rate, switching error correction protocols, or rerouting the quantum link-result in faster key exchange, enhanced security, or bandwidth efficiency under varying network and environmental conditions. The method enables real-time system tuning, thereby improving QKD availability and reducing the risk of link failure or compromise.

Overall, this approach achieves dynamic, AI-driven resilience in QKD systems and allows for scalable deployment in large and complex telecommunication infrastructures, including 5G and 6G networks. Before applying the second set of QKD operational parameters it is beneficial to assess if they really result in a better performance than the first set of QKD operational parameters. This can be done by calculating an appropriate reward function as will be explained in the following.

The technical effect of this invention is that it enables QKD systems to dynamically react to real-time network events and performance degradations, significantly enhancing robustness, reliability, and efficiency.

In an embodiment, the first set of QKD operational parameters and/or the second set of QKD operational parameters comprises one or more of: a photon emission rate, an energy setting, an error correction protocol, a security protocol, a routing path, multipath usage, a load balancing setting, and/or an emission timing or time window adjustment.

This embodiment specifies the types of QKD operational parameters that can be adapted to improve the performance and security of the quantum key distribution process. For example, adjusting the photon emission rate allows the system to increase or reduce throughput of keys depending on link quality. The energy setting controls the power level of the quantum source or supporting electronics, which is essential for energy-aware operation in edge or mobile deployments. Switching between error correction protocols or tuning their parameters enables the system to maintain low error rates even under poor signal conditions. The security protocol may include using a security protocol with enhanced security, fallback to post-quantum cryptography or other hybrid schemes in case quantum link quality degrades. Routing path adaptation ensures that QKD traffic can be rerouted around unstable or insecure segments or nodes of the network. Additionally, multipath usage allows key material to be distributed redundantly or in fragments over parallel quantum channels, enhancing robustness. Load balancing ensures that processing or key exchange workload is efficiently distributed across network nodes, and emission timing or time window adjustments allow synchronization with varying physical layer dynamics.

The technical effect is that the system has fine-grained control over a broad range of QKD-relevant parameters, enabling intelligent, situational responses to link conditions, threats, and performance demands. This leads to a more resilient and resource-efficient QKD implementation in dynamic telecommunication networks.

In an embodiment, the method comprises that: the photon emission rate is increased in response to a decrease in photon detection rate to maintain the key generation rate; the energy setting is reduced during periods of low traffic to improve energy efficiency; the error correction protocol is changed to a more robust scheme in response to increased quantum bit error rate; the security protocol is switched to a more secure algorithm in response to a threat detection; the routing path is reassigned in response to a degradation of the quantum link, in response to a threat detection and/or to reduce energy consumption; multipath usage is activated when a security threat is detected to improve resilience and/or to increase the bandwidth; the load balancing setting is adjusted to redistribute quantum key exchange operations across multiple nodes under high network load; and/or the emission timing is modified to reduce signal collisions, timing-related errors or to counter threat attacks. The emission timing can also be adjusted to counter threat attacks through the QKD procedure. In a very simplified example, it is known that a certain channel is attacked from 9:00 pm to 9:05 pm. Then the emission timing can be set in a way that the keys are distributed outside this five minute window.

This embodiment provides rules for how individual QKD operational parameters are dynamically adjusted in response to specific conditions. For example, an increased photon emission rate helps compensate for lower detection rates, ensuring a stable key generation throughput. Reducing energy settings during low traffic periods helps conserve power, which is particularly beneficial in edge or mobile deployments. The ability to switch to a more robust error correction protocol when the QBER rises enhances reliability under noisy conditions. Upon detecting a threat, switching to a stronger security protocol improves resistance to attacks. Rerouting traffic in response to link degradation or for energy optimization allows the system to maintain secure communication paths even under adverse conditions. Enabling multipath transmission during threats increases resilience and potentially enhances bandwidth utilization. Load balancing helps distribute quantum key exchange processing across nodes to avoid bottlenecks, while adjusting emission timing reduces the likelihood of collisions or timing-based attack vectors.

The technical effect is a highly adaptable system that fine-tunes its behavior in real time for reliability, security, and performance - a critical requirement in modern quantum-secured telecommunication environments.

In an embodiment, the method comprises that the reassignment of the routing path comprises one or more of: rearranging the communication nodes, skipping previously used communication nodes, performing mobility-aware routing, and/or splitting the routing path across multiple quantum links.

This embodiment provides specific strategies for rerouting QKD traffic in response to network conditions or threats. Rearranging communication nodes enables the system to reconfigure logical paths without changing physical topology, offering flexibility in response to faults. Skipping previously used nodes avoids compromised or unreliable intermediaries, which is valuable for both security and resilience. Mobility-aware routing allows dynamic adaptation based on the movement of nodes or communication devices, particularly important in mobile or 5G or 6G scenarios where communication devices may change location. Splitting the routing path enables parallel key distribution over multiple quantum links, which enhances redundancy and can increase overall key throughput.

The technical effect is a more robust and context-sensitive QKD routing mechanism, improving continuity and performance in dynamic network topologies.

The method can additionally comprise measures for identifying communication nodes or sections of the network environment where an attack is occurring. This process operates as follows: the communication path between the first communication device and the second communication device is segmented based on the position of a measuring node that is capable of evaluating quantum link values. The measuring node logically divides the communication path into a first communication section and a second communication section, corresponding to the path segments before and after the measuring node. For each of these sections, the measuring node collects quantum link values and transmits the data to the threat-detection-module. Based on this input, the threat-detection-module can determine whether an attacker is likely located in the first or the second communication section. This segmentation and evaluation process can be recursively repeated - for example, by deploying additional measuring nodes along the affected section - in order to further localize the potential source of the attack. By narrowing down the compromised portion of the communication path, the system can recalculate a new routing path for QKD that avoids only the critical, potentially attacked nodes. This allows the use of shorter, more efficient paths for quantum key distribution. Without such localization, rerouting would require avoiding larger portions of the network, resulting in unnecessarily long and inefficient communication paths.

Considering a QKD session between a first communication device (Device A) and a second communication device (Device B). The quantum key is transmitted over a multi-hop optical network consisting of intermediate nodes: Node1 → Node2 → Node3 → Node4.

A measuring node is initially positioned at Node3, where it monitors quantum link values for the two adjacent segments:
- Section 1: Device A → Node1 → Node2 → Node3
- Section 2: Node3 → Node4 → Device B

The threat-detection-module receives the quantum link values for both sections. If the quantum bit error rate (QBER) and polarization anomalies are high in Section 1 but normal in Section 2, the system infers that the attacker is more likely located somewhere between Device A and Node3.

To further narrow down the location, a second measuring node is placed at Node2. This splits Section 1 into:
- Section 1a: Device A → Node1 → Node2
- Section 1b: Node2 → Node3

After analysis, the threat-detection-module finds that anomalies only appear in Section 1a. Based on this result, it can be concluded that the attacker is likely present in the segment between Device A and Node2.

The rerouting-module then calculates a new QKD path that avoids only Node1 and Node2, selecting an alternate route like:
Device A → Node5 → Node3 → Node4 → Device B

Because the attacker's location has been accurately isolated, the new path remains short and efficient, unlike a conservative reroute that would bypass the entire upper half of the network.

In an embodiment, the detection of the at least one operational condition is based on one or more of:
- an increase in quantum bit error rate, latency, or packet loss for detecting a degradation of the quantum link;
- an abnormality pattern in polarization states or photon arrival times, in particular wherein the polarization states or photon arrival times are combined with network metrics information, for detecting a threat to the QKD; and/or
- mobility information derived from GPS data, base station handover signaling, quantum signal timing variations, and/or historic movement data of the first and/or the second communication device for detecting a mobility event affecting a QKD communication party.

This embodiment specifies how different types of operational conditions in the QKD environment can be automatically detected. A rise in quantum bit error rate (QBER), combined with classical indicators like latency and packet loss, is a strong signal for link degradation and may trigger parameter adjustments or rerouting. To detect cyber threats, the system analyzes abnormal patterns in polarization states or photon arrival times - potentially caused by tampering - and can combine this quantum-layer data with classical network metrics to improve detection accuracy. For identifying mobility events, the system leverages data such as GPS coordinates, base station handover signals, and signal timing variations, which reflect changes in physical location of one or both QKD parties. Incorporating historical movement data helps in predicting motion trends and planning proactive adaptations.

The technical effect is a multi-layered detection mechanism capable of distinguishing between physical link degradation, active threats, and topology shifts, enabling the system to respond with the appropriate AI module for optimal mitigation.

In an embodiment:
- the dynamic-adaptation-module comprises a Dynamic-Adaptation-AI trained on historical quantum link data and configured to receive as input one or more of a quantum bit error rate, a currently used error correction protocol, latency, a signal-to-noise ratio, and/or packet loss, and to output at least a subset of the second set of QKD operational parameters;
   ∘ in particular second dynamic-adaptation-module-specific QKD operational parameters,
- the threat-detection-module comprises an autoencoder and is configured to identify an abnormality pattern based on polarization states, photon arrival times, and/or network metrics information of the quantum link as input and to output at least a subset of the second set of QKD operational parameters,
   ∘ in particular second threat-detection-module-specific QKD operational parameters;
- the rerouting-module uses location information of the first communication device and/or the second communication device as input to a routing table or a trained-routing-AI, wherein a new communication path is obtained from the routing table or the trained-routing-AI as at least a subset of the second set of QKD operational parameters to establish a new communication path or multiple communication paths between the devices; and/or
   ∘ in particular second routing-module-specific QKD operational parameters;
- the hierarchical-control-module of the adaptive-QKD node receives as input to its trained hierarchical-AI the measured quantum link values and/or the second set of QKD operational parameters of multiple network nodes and outputs at least a subset of the second set of QKD operational parameters;
   ∘ in particular, a hierarchically-optimized second set of QKD operational parameters. The input of the measured quantum link values ensures that the hierarchical-AI can consider the actual load of the network. For that purpose it can also use multiple measured quantum link values assessed at different locations distributed within the network. In particular different locations that are related to the key exchange of the two communication devices.

This embodiment details the AI-based architecture of the QKD optimization system, assigning specific roles to distinct modules. The dynamic-adaptation-module employs a dedicated AI trained on historical link conditions and learns correlations between network state (e.g., QBER, latency) and optimal parameter settings. This allows real-time decisions to improve link robustness and maintain secure key generation rates by changing the QKD operational parameters accordingly.

The Dynamic-Adaptation-AI can be trained using supervised machine learning or reinforcement learning techniques. In a supervised approach, historical quantum link data is used where input features can include: Quantum bit error rate (QBER), current error correction protocol, latency, signal-to-noise ratio (SNR), packet loss, and/or other suitable values. Each training instance is labeled with the corresponding set of optimal QKD operational parameters that lead to improved performance (e.g., increased key generation rate or reduced QBER). Models such as gradient-boosted decision trees (GBDT) or neural networks can be used. Alternatively, a reinforcement learning (RL) approach (e.g., Deep Q-Network or Proximal Policy Optimization) can be applied. In this case, the AI interacts with a simulated or live network environment. It observes a state (e.g., current network conditions), takes an action (changes a parameter), and receives a reward (e.g., for a higher key generation rate or QBER minimization). Over time, the RL agent learns a policy that maps states to optimal actions.

The threat-detection-module uses an autoencoder trained to detect anomalous signal patterns, such as shifts in polarization or unexpected timing variations. These may indicate eavesdropping or tampering. Its ability to output specific QKD parameter adjustments - such as triggering a protocol switch, a rate change, and/or to apply re-routing - makes it a proactive security component. Hence, the threat-detection-module can trigger the rerouting module so that both modules can work in a combined way to produce a synergetic effect.

The autoencoder is typically trained using unsupervised learning. It is trained on normal operating data only - that is, quantum link values (polarization states, photon arrival times, and associated network metrics) observed during trusted, attack-free sessions.

An autoencoder consists of: An encoder that compresses the input into a low-dimensional representation (latent space), A decoder that reconstructs the original input from this latent representation.

The training objective is to minimize the reconstruction error between the input and output. Once trained, the autoencoder will reconstruct "normal" data well (low error), but will exhibit high reconstruction error when presented with abnormal or manipulated data (e.g., resulting from eavesdropping, side-channel attacks, etc.). A detection threshold can be set based on the distribution of reconstruction errors during training. This makes the autoencoder a powerful tool for anomaly detection in QKD environments without requiring labeled attack data.

The rerouting-module interprets geolocation data or network topology signals using either a rule-based routing table or a trained AI model to suggest alternative, potentially multipath-based, communication routes. This is critical when part of the network becomes unstable or compromised or it makes the key distribution more efficient because it can be predicted with which base station a communication device that is moving will be connected next. In this case the communication route can proactively be changed to include this predicted base station.

The trained-routing-AI can be trained using supervised learning or graph-based reinforcement learning, depending on the complexity of the network. For a supervised approach, historical routing decisions are collected alongside performance outcomes (e.g., QBER, link availability, energy usage). Each data point includes the current network topology, device location data, and quantum link metrics as input, with the optimal routing path as the label. Alternatively, in a reinforcement learning setup, the routing AI explores different paths through a simulated or real-time graph representing the network. Rewards are assigned based on routing efficiency, security resilience, and key throughput. The AI learns to optimize for low-latency, secure routing paths - especially valuable in mobile or unstable networks.

The hierarchical-control-module oversees optimization across multiple nodes, using network-wide inputs to generate a coordinated configuration strategy. This ensures that local parameter changes do not degrade global performance and that routing or adaptation actions are harmonized across the infrastructure.

The hierarchical-AI is trained using centralized supervised learning or federated learning across distributed nodes. Input data includes quantum link values and QKD operational parameters collected from multiple nodes in the network. The training objective is to predict network-wide optimized parameter sets that result in balanced performance (e.g., fair key rates, minimized overall QBER, energy efficiency). The output may include coordinated decisions like load balancing, synchronization of emission timing, or the global selection of routing paths. In federated setups, each node trains the hierarchical-AI on local data and shares only model updates (e.g., gradients), not raw quantum link data - preserving data privacy and complying with security policies.

Together, these AI-driven modules yield a scalable, modular QKD control system capable of continuous learning, rapid adaptation, and robust threat handling - improving security, performance, and network efficiency in future telecommunication infrastructures.

In an embodiment, the threat-detection-module:
- uses a Deep Q-Network, DQN, to dynamically adjust the reconstruction error threshold of the autoencoder in real time based on one or more of: i) network traffic load, ii) environmental noise affecting the quantum link, and/or iii) attack severity learned from a federated threat database; and/or
- is trained using federated learning across multiple edge nodes of the telecommunication network such that localized attack patterns are learned without transmitting raw quantum link data between the nodes.

This embodiment enhances the threat-detection-module by introducing a Deep Q-Network (DQN) that adaptively adjusts the autoencoder's reconstruction error threshold. Instead of using a static threshold, the DQN evaluates real-time contextual inputs such as network traffic load, environmental noise (e.g., rain or interference), and even threat severity scores aggregated from a federated threat database. This enables the module to maintain high detection accuracy under varying operational conditions and attack intensities. Additionally, the autoencoder itself is trained using federated learning across edge nodes, which allows the model to learn localized attack signatures - such as region-specific jamming or spoofing patterns - without exposing raw quantum link data to a central server. This ensures data privacy and scalability while maintaining high situational awareness across the network.

The technical effect is a privacy-preserving, context-aware threat detection mechanism that responds to real-time conditions with optimized sensitivity, reducing both false positives and missed intrusions.

In an embodiment, the respective AI of one or more of the dynamic-adaptation-module, the threat-detection-module, the rerouting-module, and/or the hierarchical-control-module:
- is improved over time through self-learning based on historical data to predict and prevent potential performance degradations of the QKD process; and/or
- is updated during operation using online learning based on new quantum link data obtained from the field; and/or
- is trained across multiple nodes of the telecommunication network using federated learning without sharing raw quantum link data between the nodes.

This embodiment enhances the adaptability of the AI modules by allowing them to evolve beyond their initial training. Self-learning based on historical data enables the AI to recognize long-term patterns and proactively adjust QKD parameters before degradation occurs, which improves predictive reliability. Online learning ensures that each module can adapt in real-time to new and unforeseen conditions by incrementally updating the model with fresh field data - crucial for environments with high variability.

Federated learning provides a privacy-preserving approach for collaborative model training across distributed nodes. By sharing only model updates and not raw quantum link data, the network benefits from localized learning (e.g., region-specific noise patterns or attack types) without compromising data confidentiality. Each module - whether focused on adaptation, routing, threat detection, or control - can leverage these training approaches to stay relevant, secure, and efficient throughout its deployment lifecycle.

In an embodiment,
- distributed QKD nodes are deployed near the first communication device and/or the second communication device, in particular implemented within base stations of the telecommunication network; and/or
- sensors for measuring the quantum link values are implemented near the communication endpoints, in particular within the base stations.

QKD nodes are entities that take part in the QKD process. This embodiment addresses the physical deployment of QKD infrastructure. By placing QKD nodes near the endpoints - such as integrating them directly into base stations - the system reduces latency, minimizes link loss, and improves the robustness of key generation. Likewise, positioning sensors for quantum link monitoring close to the endpoints ensures more accurate and timely measurements of conditions such as QBER, polarization shifts, or photon arrival timing.

The technical advantage lies in improved reaction speed, measurement fidelity, and system scalability in dense or mobile network topologies.

In an embodiment, the adaptive-QKD node comprises FPGA-based hardware configured to accelerate real-time processing of AI models for determining the second set of QKD operational parameters.

This embodiment specifies that the adaptive-QKD node utilizes Field-Programmable Gate Array (FPGA) hardware to accelerate the execution of its AI models. FPGAs provide parallel processing capabilities and low-latency performance, making them particularly well-suited for time-sensitive tasks such as real-time inference in dynamic QKD environments. Implementing AI models - such as reinforcement learning agents or autoencoders - on FPGAs enables faster adaptation and decision-making, especially in network nodes with limited computing resources.

In an embodiment, parts of the telecommunication network are classified into a secure-stable-part and an unsecure-unstable-part, and the measuring and/or monitoring of the unsecure-unstable-part is performed at a higher frequency than the measuring and/or monitoring of the secure-stable-part.

This embodiment introduces a classification-based approach for optimizing the monitoring frequency of quantum link values across the network. By distinguishing between secure-stable and unsecure-unstable parts of the network, the system can allocate computational and sensor resources more efficiently. The unsecure-unstable areas, which are more prone to attack or degradation, are monitored more frequently, allowing for faster detection and response. Historical data can be used to classify the parts of the network accordingly.

This selective monitoring strategy reduces unnecessary overhead in well-behaved parts of the network while maintaining high sensitivity where it's needed most. The technical advantage is an adaptive, resource-aware sensing system that balances performance and efficiency in large-scale QKD deployments.

According to a second aspect of the invention, an adaptive-QKD node configured to perform the method described above is provided, the adaptive-QKD node comprising:
- a monitoring entity configured to receive and/or to monitor quantum link values and/or the monitoring entity is associated to the adaptive-QKD node so that the adaptive-QKD node can receive the measurement results; if sometimes the term monitoring unit is used, it is to be understood that monitoring entity and monitoring unit are identical;
- an analytics entity configured to detect one or more operational conditions based on the monitored quantum link values;
- a dynamic-adaptation-module, a threat-detection-module, a rerouting-module, and/or a hierarchical-control-module, each configured to determine at least a subset of a second set of QKD operational parameters in response to the detected operational condition(s).; and/or
   o This means that each of the modules can create the second set of QKD parameters that can be applied to the telecommunication network and/or the modules can work together to create a larger second set that can be applied to the telecommunication network.
   ∘ In a very simple example, the second set of QKD operational parameters can comprise two parameters (QKD₁, QKD₂), wherein QKD₁ controls the generation of photons and QKD₂ sets routing parameters. The dynamic-adaptation-module can set a new photon rate (QKD₁, "Empty") as its subset of the second set of QKD operational parameters. This can be handed over to the threat-detection-module that can additionally create its subset with respect to the routing parameters, so that one finally gets (QKD₁, QKD₂); in any case (QKD₁, "Empty") can already be applied to the network having the effect that only the generation of photons will be adjusted;
   o hence, the modules can each create their respective values to adjust the QKD procedure but they can also work together to generate an synergetic effect.
   ∘ For example, if the dynamic-adaptation-module, the rerouting-module, and/or a hierarchical-control-module adapt the routing parameters, this new route shall be handed over to the threat-detection-module so that it can assess if this new route is possibly under attack of an eavesdropper;
- an operational module configured to apply the second set of QKD operational parameters to adjust a QKD process and/or to signal the second set of QKD operational parameters to the telecommunication network. In telecommunication and networking, a node generally refers to any device or point in the network that can send, receive, process, or forward data. The exact nature of a node can vary based on context and network architecture.

To clarify: The adaptive-QKD node can comprise the monitoring entity, the analytics entity, dynamic-adaptation-module, and/or the operational module.

This adaptive-QKD node integrates the core elements required to manage and adapt quantum key distribution operations. The monitoring entity may comprise quantum channel sensors or interfaces to receive metrics from external sources, while the analytics entity detects changes such as link degradation or threats using rule-based or AI-assisted techniques. The adaptive-QKD node hosts modular AI models that specialize in different adaptation tasks - e.g., parameter tuning, rerouting, or hierarchical control - each able to act independently or in coordination.

The operational module acts as the interface to the QKD hardware or network layer, either applying the optimized parameters directly or signaling them to other entities within the telecommunication network. This results in a self-configuring device capable of maintaining QKD performance and security under real-time conditions. The modularity enables deployment across diverse physical platforms, including base stations, routers, or mobile nodes.

In an embodiment, the adaptive-QKD node is a base station of the telecommunication network.

This embodiment specifies that the device implementing the adaptive QKD method is a base station within the telecommunication network. Base stations represent ideal deployment locations due to their proximity to communication endpoints, their access to environmental and mobility data, and their role in managing both quantum and classical traffic. Integrating the QKD optimization logic into a base station enables real-time, low-latency decision-making and facilitates scalable deployment within existing network infrastructures. The technical advantage lies in leveraging base stations as intelligent QKD nodes, enabling decentralized control, reduced latency, and improved adaptability in 5G/6G networks.

According to a third aspect of the invention, there is provided a telecommunication network, in particular a 5G and/or a 6G network, for performing quantum key distribution, QKD, in particular the telecommunication network is being configured to execute the method described above, the telecommunication network is configured to distribute keys by using QKD and can comprise:
- communication links configured to transfer the polarized photons to enable QKD between communication devices;
- at least one monitoring entity configured to measure and/or monitor quantum link values between the communication devices;
- at least one analytics entity configured to detect operational conditions based on the quantum link values;
- at least one adaptive-QKD node comprising one or more of a dynamic-adaptation-module, a threat-detection-module, a rerouting-module, and a hierarchical-control-module, configured to determine a second set of QKD operational parameters; and
- at least one operational module configured to apply the second set of QKD operational parameters to the QKD process between the communication devices.

In an embodiment, the different entities can all be realized by the adaptive-QKD node, the telecommunication network can therefore also be described as being configured to execute the method described above and comprising:
- an adaptive-QKD node as described above;
- being configured to distribute keys by using QKD, wherein the telecommunication network provides a communication path from the first communication device to the second communication device and a communication channel to the adaptive-QKD node. The adaptive-QKD node receives data, in particular measurement data over this communication channel and can at least send the second set of QKD operational parameters over this communication channel to the respective nodes within the telecommunication network that apply these parameters; the telecommunication network is in particular a 5G and/or 6G telecommunication network;

This telecommunication network reflects a distributed architecture in which dedicated components collaborate in a functional way to monitor, analyze, optimize, and apply QKD configurations. These components can be distributed over different entities or can all be implemented within the adaptive-QKD-node. The first and second communication devices carry out quantum key exchange, while the telecommunication network facilitates key distribution, potentially across multiple intermediate nodes. The monitoring entity and analytics entity collect and interpret data about quantum link performance and environmental conditions.

The adaptive-QKD node, with its specialized modules, processes this information and computes a new set of QKD operational parameters tailored to current conditions. The operational module then enforces these parameters, either locally or across the system. The result is a network-aware, AI-assisted QKD system that can adaptively maintain security and performance at scale - even in large, heterogeneous telecommunication infrastructures.

According to a fourth aspect of the invention, a system for performing quantum key distribution, QKD, in particular the system being configured to execute the method described above is provided, the system comprising:
- a first communication device and a second communication device configured to perform QKD; the communication devices can be UEs like smartphones, computers, vehicles, servers, etc.
- a telecommunication network configured to distribute keys by using QKD; the telecommunication network is in particular a 5G and/or 6G telecommunication network;
- at least one monitoring entity configured to measure and/or monitor quantum link values between the communication devices;
- at least one analytics entity configured to detect operational conditions based on the quantum link values;
- at least one adaptive-QKD node comprising one or more of a dynamic-adaptation-module, a threat-detection-module, a rerouting-module, and a hierarchical-control-module, configured to determine a second set of QKD operational parameters; and
- at least one operational module configured to apply the second set of QKD operational parameters to the QKD process between the communication devices.

In an embodiment, the different entities can all be realized by the adaptive-QKD node, the system can also be described as being configured to execute the method described above and comprising:
- an adaptive-QKD node as described above;
- a first communication device and a second communication device configured to perform QKD; the communication devices can be UEs like smartphones, computers, vehicles, servers, etc.
- a telecommunication network configured to distribute keys by using QKD, wherein the telecommunication network provides a communication path from the first communication device to the second communication device and a communication channel to the adaptive-QKD node. The adaptive-QKD node receives data, in particular measurement data over this communication channel and can at least send the second set of QKD operational parameters over this communication channel to the respective notes within the telecommunication network that applies these parameters; the telecommunication network is in particular a 5G and/or 6G telecommunication network;

In the following, preferred implementation examples of the present invention are explained with reference to the accompanying figures:
- Fig. 1:: shows an overview of the inventive telecommunication network.
- Fig. 2:: illustrates a process flow carried out by a dynamic-adaptation-module;
- Fig. 3:: illustrates a process flow within a threat-detection-module;
- Fig. 4:: illustrates the functionality of a hierarchical-control-module;
- Fig. 5:: shows an overview of the system architecture of a self-learning-module;
- Fig. 6:: shows the quantum channel monitoring and adaption of the self-learning-module;
- Fig. 7:: shows the threat detection and mitigation process of the self-learning-module;
- Fig. 8:: illustrates the integration of the invention into the telecommunication network;
- Fig. 9:: shows the self-learning and continuous improvement aspect;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

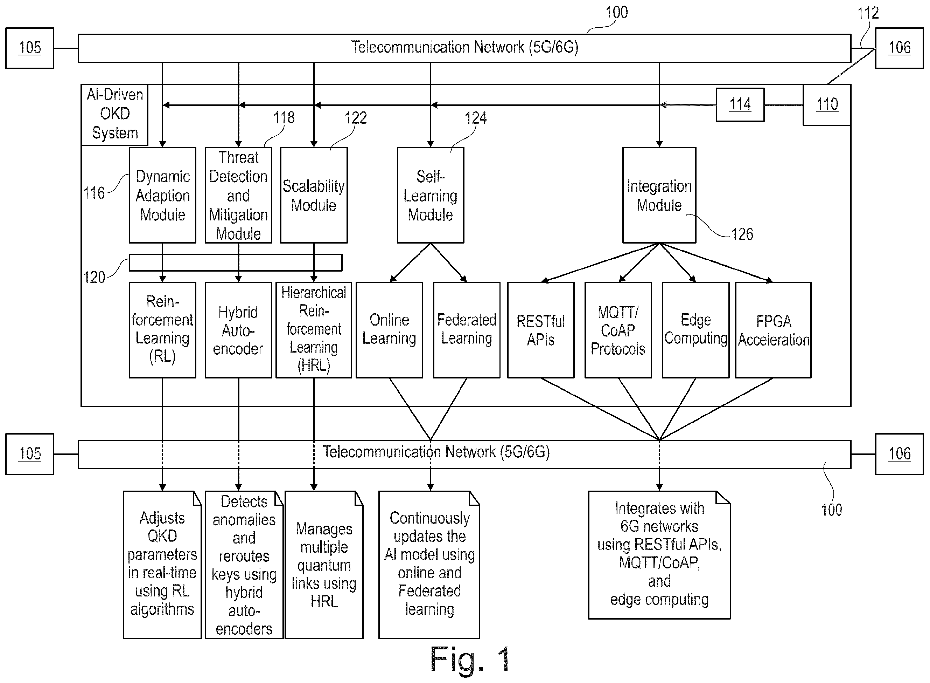

Fig. 1 shows an overview of the inventive telecommunication network 100 that integrates an artificial intelligence-based quantum key distribution (QKD) process. The network 100 comprises a first communication device 105 and a second communication device 106 connected via at least one quantum link 112 and a classical channel within the telecommunication network 100. These devices are configured to exchange encryption keys using QKD protocols such as BB84 over the quantum link 112. The QKD procedure is enhanced by various intelligent components hosted within an adaptive-QKD node 128. In an embodiment, these components can also be distributed over multiple network nodes, these multiple network nodes then function as the adaptive-QKD node 128.

The adaptive-QKD node 128 is shown comprising a modular AI-based architecture, in which a monitoring entity 110 is configured to measure and/or receive quantum link values associated with the QKD process. These values are transmitted to an analytics entity 114 that evaluates the monitored quantum link values in order to detect operational conditions such as degradation of the quantum link 112, mobility of a communication party, or potential threats to the QKD process.

Detected operational conditions are forwarded within the adaptive-QKD node 128 to at least one of the specialized modules including a dynamic-adaptation-module 116, a threat-detection-module 118, a rerouting-module 120, and a hierarchical-control-module 122. These modules process the received data and determine at least a subset of a second set of QKD operational parameters, which may include modifications to QKD protocols, emission rates, emission timing, error correction protocols, or routing decisions.

The dynamic-adaptation-module 116 utilizes reinforcement learning (RL) to adjust QKD parameters in real time based on input values such as quantum bit error rate, latency, and signal-to-noise ratio. The threat-detection-module 118 includes a hybrid autoencoder trained to detect anomalies in polarization states or photon arrival times, and to initiate reroute of quantum keys when a threat is detected. The rerouting-module 120 can employ geolocation data to manage and reassign communication paths across multiple quantum links 112. The hierarchical-control-module 122 supports cross-node optimization by coordinating parameter updates across several adaptive-QKD nodes 128 within the network.

To enable continual performance improvement, the adaptive-QKD node 128 also comprises a self-learning module 124. This module employs online learning to update AI models based on new quantum link data in real time and uses federated learning to train models across distributed edge nodes without sharing raw quantum link data. This enhances the ability to detect local attack patterns while preserving data privacy.

An integration-module 126 interfaces the adaptive-QKD node 128 within the telecommunication network 100 using RESTful APIs, MQTT/CoAP protocols, and edge computing infrastructures. This allows seamless integration with 5G and 6G network architectures. The integration-module 126 may also incorporate FPGA-based hardware acceleration to enable real-time inference by the AI models used within the optimization modules.

As shown in Figure 1, each component of the system contributes to the intelligent and adaptive control of QKD operations between the first communication device 105 and the second communication device 106. The combined system allows for real-time monitoring, intelligent threat detection, dynamic adaptation, and scalable integration of QKD within the telecommunication network 100.

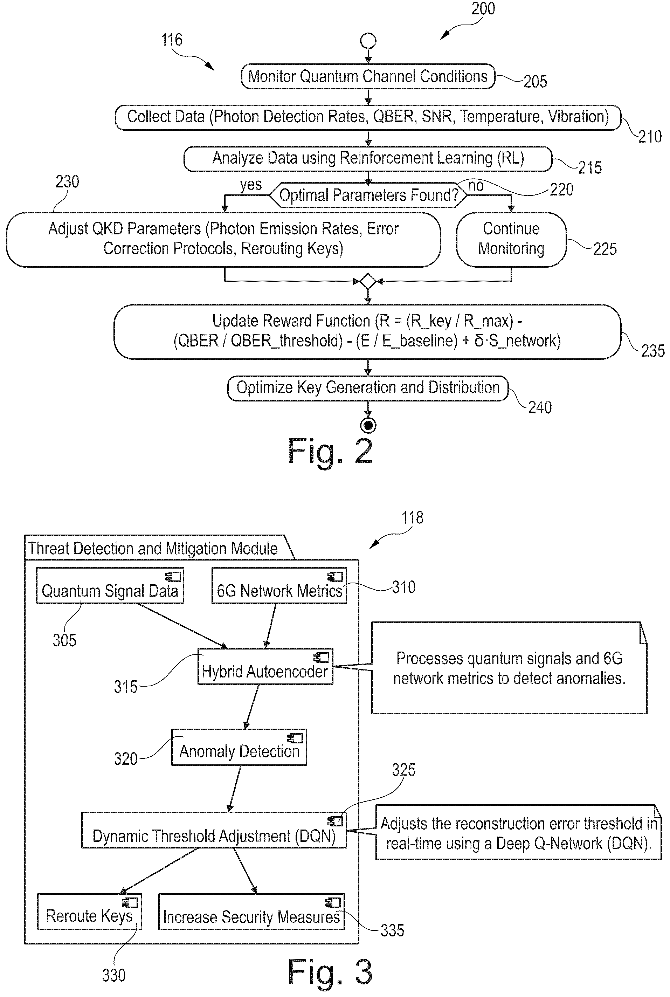

Figure 2 illustrates a process flow 200 carried out by the dynamic-adaptation-module 116 within the adaptive-QKD node 128. The dynamic-adaptation-module 116 is configured to continuously monitor and adapt quantum key distribution (QKD) parameters in real time based on a multi-dimensional evaluation of the quantum link 112 and network state.

In step 205, the dynamic-adaptation-module 116 initiates monitoring of quantum channel conditions. This involves real-time measurement of parameters such as photon detection rates, latency, packet loss, quantum bit error rate (QBER), signal-to-noise ratio (SNR), environmental temperature, and physical vibrations. These values are collected in step 210 and form the basis for dynamic adaptation.

In step 215, the collected quantum link values are processed using a reinforcement learning (RL) model, such as a Deep Q-Network (DQN) or Proximal Policy Optimization (PPO). The trained RL model evaluates the current network state and identifies whether an improved (optimal) set of QKD operational parameters can be determined based on the observed environment and system history.

An illustrative example of training the reinforcement learning (RL) model used in the dynamic-adaptation-module 116 is as follows. The RL agent is trained within a simulated or real quantum key distribution (QKD) environment representing the behavior of an adaptive-QKD node 128 deployed at a 6G-compatible base station. In this environment, quantum channel and classical network conditions vary dynamically. At each time step, the RL model receives as input a state vector that includes photon detection rate, quantum bit error rate (QBER), signal-to-noise ratio (SNR), temperature, vibration, current energy consumption, and classical link metrics such as latency and packet loss. Optionally, the state vector may also include previously applied QKD operational parameters to provide historical context. The RL agent can select actions such as adjusting photon emission rates, switching between error correction protocols, rerouting key material across different network paths, modifying emission timing, or activating multipath distribution. The impact of each action is evaluated using a reward function defined as: R = (R_{key} / Rₘₐₓ) - (QBER / QBERt_{hreshold}) - (E / E_{baseline}) + δ·S_{network}, where R_{key} is the current key generation rate, Rₘₐₓ is the device-specific maximum achievable rate, QBER is the current bit error rate, QBER_{threshold} represents a security threshold (e.g., 2%), E is the energy consumption of the current configuration, E_{baseline} is the baseline energy use of a non-adaptive QKD system, S_{network} is a normalized network health score based on latency and packet loss, and δ is a dynamically tuned weight factor, for example via Bayesian optimization. The RL model is trained over many episodes using a learning algorithm such as Deep Q-Network (DQN) or Proximal Policy Optimization (PPO), to optimize its policy through reward feedback. Training data can be derived from recorded experimental QKD sessions or from simulation environments that model noise, mobility, and interference. After training, the model is deployed within the dynamic-adaptation-module 116, where it operates in real time to select optimal QKD parameter adjustments in response to changing link conditions, thereby maintaining secure and efficient key distribution without requiring manual tuning.

In step 220, the system checks if a sufficiently optimal adaptation decision has been found. If not, the system continues to monitor the quantum channel conditions without adjusting parameters (step 225) and goes back to step 205. If optimal parameters are found, the module proceeds to step 230, where it dynamically adjusts one or more QKD operational parameters. These may include photon emission rates, selection or switching of error correction protocols (e.g., switching from BB84 to E91), and rerouting of quantum keys through alternative paths in the network.

In step 235, the reinforcement learning model's reward function R is updated to guide future adaptation decisions. The reward function R is defined as: $R = \left({R}_{key}/{R}_{max}\right) - \left(QBER/{QBER}_{threshold}\right) - \left(E/{E}_{baseline}\right) + δ ⋅ {S}_{network}$ where QBER_{threshold} represents the maximum acceptable QBER (typically 2%, according to ITU-T Y.3800). S_{network} denotes a normalized 6G network health score in the range of 0 to 1, derived from classical link indicators such as latency and packet loss. The weight δ is dynamically optimized, for example through Bayesian optimization, to prioritize stable paths and efficient operation.

This formulation ensures security compliance through heavy penalization of insecure key generation conditions (i.e., QBER > 2%), while also optimizing for energy efficiency and performance relative to hardware limits. Furthermore, it tightly integrates classical and quantum network conditions by factoring in S_{network}.

The adaptation process concludes in step 240 with the optimization of key generation and distribution based on the newly selected parameters. This loop ensures that the dynamic-adaptation-module 116 operates in a closed feedback manner, allowing it to react intelligently to complex and unforeseen conditions in real time. For instance, in a 5G and/or 6G backhaul scenario with rapidly fluctuating interference, the system may choose to reroute keys instead of increasing photon emission rates to avoid saturation of photon detectors - a decision derived not from predefined rules but from learned behavior via reinforcement learning.

Fig. 3 illustrates a process flow within the threat-detection-module 118 of the adaptive-QKD node 128. This module is configured to detect potential threats to the QKD process based on anomalies in quantum signal behavior (e.g., photon arrival times, polarization states, and 5G or 6G network metrics, e.g., beamforming interference patterns, mmWave channel state information) and to initiate appropriate security-enhancing responses. In step 305, quantum signal data such as photon arrival times and polarization states is collected, along with 6G network metrics in step 310 including beamforming patterns, latency, and mmWave channel state information. These inputs are fed into a hybrid autoencoder 315, which is trained to learn a baseline model of normal operation based on combined quantum-classical input. In step 320, the autoencoder output is analyzed for anomaly detection. If a reconstruction error indicates a deviation from expected behavior, the anomaly is flagged for further analysis.

To adapt its detection threshold dynamically, the threat-detection-module 118 uses a Deep Q-Network (DQN) in step 325. This DQN continuously adjusts the autoencoder's reconstruction error threshold in real time based on variables such as 6G traffic load, environmental noise (e.g., rain attenuation at 140 GHz), and attack severity information derived from a federated threat database. In a federated learning architecture, autoencoders are trained at multiple edge nodes across the telecommunication network 100 using local data, without exchanging raw quantum data, thereby enabling the detection of localized attack patterns such as city-specific jamming signatures.

When a threat is confirmed, the module initiates a response. In step 330, the threat-detection-module 118 cooperates with the rerouting-module 120 to reroute quantum keys through alternative quantum paths based on a real-time quantum routing table. In parallel, the system may also increase security measures 335, such as switching to more robust QKD protocols (e.g., E91) or increasing the photon emission rate.

In particular, the rerouting-module 120 parses the Network Slice Selection Assistance Information (NSSAI) received from the 5G core network, specifically from the Access and Mobility Management Function (AMF) or the Session Management Function (SMF). Based on the Slice/Service Type (SST) and Slice Differentiator (SD) contained in the NSSAI, each network slice is mapped to a specific QKD configuration. For example, a latency-optimized slice may use shorter key lengths and lower redundancy, while a security-optimized slice may use longer keys and more robust error correction protocols. This capability allows the system to provide differentiated QKD security levels based on the service requirements of each slice - a level of fine-grained adaptation not achievable in traditional QKD deployments.

Quantum path optimization is achieved via Dijkstra's algorithm, guided by real-time link data, while rerouting decisions can be performed by a reinforcement learning agent using Proximal Policy Optimization (PPO), whose state space includes quantum and classical metrics per slice, and whose actions include selecting quantum paths and adjusting emission settings. The routing table is updated in real-time using OpenFlow protocols in a Software-Defined Networking (SDN) controller. The AI continuously monitors QBER and latency metrics for each quantum link 112.

When the quantum link 112 degrades, for example when the measured QBER exceeds a predefined threshold, the AI triggers a rerouting process through the rerouting-module 120. For services operating over latency-sensitive slices, the next shortest available quantum path is selected. For high-security slices, the routing decision prioritizes the quantum path with the lowest QBER. These decisions are made by a reinforcement learning agent employing Proximal Policy Optimization (PPO). The state space used by this agent includes the slice identifier (Slice ID), QBER, photon detection rate, and latency metrics for each quantum link 112. The action space includes selecting the optimal quantum route and adjusting the photon emission rate via a Digital-to-Analog Converter (DAC). This combination of fine-grained sensing and adaptive routing allows the QKD system to maintain service-level objectives dynamically, depending on the active slice configuration.

To enable mobility-aware rerouting, the threat-detection-module 118 uses a Long Short-Term Memory (LSTM) neural network trained on both historical GPS traces and real-time location data from 5G base stations. The LSTM outputs the predicted next base station and an estimated time-to-handover. This forecast enables the AI system to proactively reroute quantum keys toward the predicted handover destination, rather than reacting after link degradation occurs. Compared to reactive rerouting strategies, this proactive method reduces handover-related latency by up to 50%. The LSTM is specifically trained on 6G mobility patterns, including urban vehicle movements and aerial drone flight paths, to increase prediction accuracy in complex environments. If the system predicts that the device will exit the coverage area of the quantum link 112, a hybrid fallback is triggered in which keys are transmitted via classical channels using CRYSTALS-Kyber. The AI dynamically adjusts the key encapsulation parameters based on the predicted handover time, balancing security and performance. To further optimize the handover process, the system employs Bayesian Optimization, defining a reward function R = α × Key Generation Rate - β × Latency - γ × Packet Loss. A Gaussian Process (GP) is used to model the relationship between handover parameters such as signal strength and device velocity, enabling the selection of the optimal rerouting and handover strategy in real time.

The rerouting-module 120 further supports multi-path rerouting for enhanced security. In this configuration, the quantum key is first split into *n* distinct shares using Shamir's Secret Sharing (SSS), such that any *k* of the *n* shares are sufficient to reconstruct the original key, where *k* ≤ *n.* This splitting is implemented in hardware using a Field-Programmable Gate Array (FPGA), which generates the polynomial coefficients and computes the shares in real time. Each share is then transmitted over a separate quantum link 112. To enhance robustness, Reed-Solomon codes are applied to the shares, ensuring that key reconstruction is possible even in the event of partial transmission loss. The AI system maintains a quantum routing table that dynamically assigns each share to a unique path based on real-time link metrics such as QBER and latency. At the receiving end, the key is reconstructed using Lagrange interpolation, also performed in hardware by the FPGA to ensure minimal delay. This multi-path transmission significantly raises the security threshold, as an attacker would have to compromise at least *k* independent quantum links 112 to recover the key. Compared to conventional single-path QKD, this architecture achieves a tenfold improvement in effective key security.

Edge computing integration further enhances the performance of the threat-detection-module 118 and the rerouting-module 120. These modules can be deployed at edge nodes located at 5G or 6G base stations, enabling real-time quantum key rerouting and optimization close to the communication endpoints. FPGA-based hardware acceleration is used to execute AI computations with minimal latency. In particular, the FPGA at each edge node implements a Deep Q-Network (DQN) that performs real-time inference to support security and rerouting decisions. The DQN is trained using a combination of historical QKD data and simulated attack scenarios, enabling the AI system to learn from both known and adversarial behaviors. To ensure privacy-preserving training and scalability, the AI model is trained using federated learning. Each edge node trains a local version of the model using stochastic gradient descent (SGD), and only model updates such as gradients are shared with a central server. The central server aggregates the updates and distributes the improved global model back to the edge nodes. To reduce latency further, an edge caching mechanism is employed to store frequently used keys. The AI system predicts which keys are likely to be needed in the near future based on historical key usage patterns and pre-caches them at the edge of the network. A Least Recently Used (LRU) replacement policy is used to manage the cache. By combining FPGA acceleration, federated learning, and predictive edge caching, the architecture achieves a rerouting latency of less than 1 millisecond, thereby fulfilling the stringent requirements of ultra-reliable low-latency communication (URLLC) services in 6G networks.

To support reliable operation in hybrid quantum-classical networks, the system includes a fallback mechanism that activates when a quantum link 112 fails or is overloaded. In such cases, the AI system reroutes key distribution through classical channels using post-quantum cryptographic schemes such as CRYSTALS-Kyber. The AI monitors the status of quantum links 112 using ping-based probing mechanisms, enabling prompt detection of unavailability. For lightweight communication between distributed devices and the AI system, protocols such as MQTT and CoAP are used to minimize overhead. The transition between QKD and classical key distribution is managed by a dedicated state machine, implemented in FPGA hardware for speed and determinism. Once the quantum link 112 is restored, the system seamlessly returns to QKD-based key exchange. During hybrid operation, the AI employs online learning techniques, including Online Gradient Descent (OGD), to update its model in real time based on observed performance metrics from the fallback mode. This continual adaptation ensures minimal degradation in security or latency during fallback and recovery events.

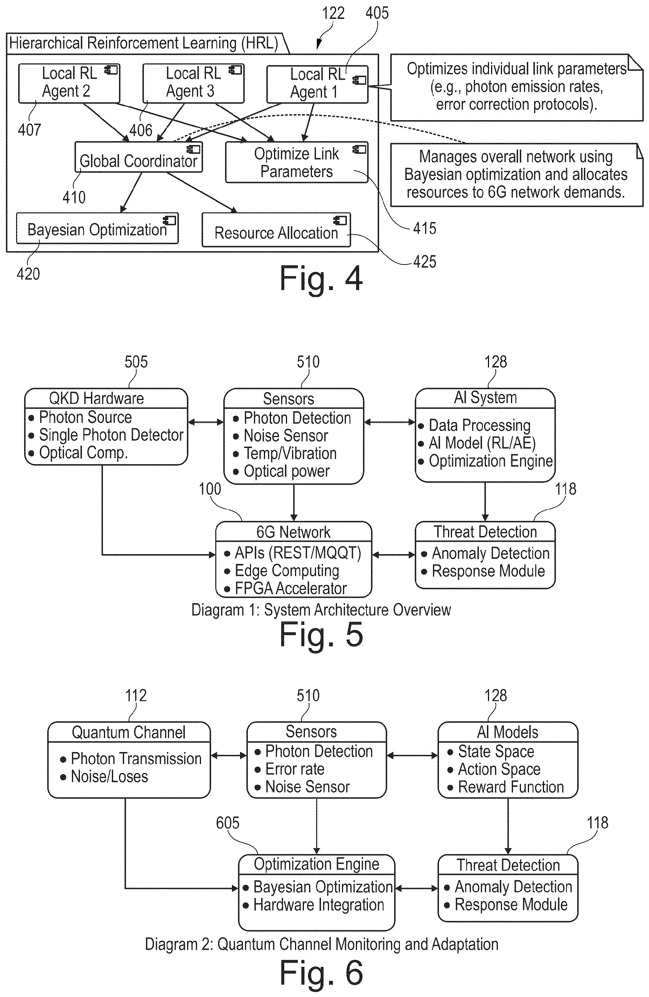

Fig. 4 illustrates the structure and functionality of the hierarchical-control-module 122, which is responsible for coordinating quantum key distribution (QKD) across a network involving multiple QKD nodes and/or quantum links 112. This module enables dynamic, large-scale optimization of QKD operations in complex 5G or 6G environments. The control logic of the hierarchical-control-module 122 is based on a hierarchical reinforcement learning (HRL) architecture, combining local and global intelligence for distributed optimization.

At the lower level of the hierarchy, multiple local reinforcement learning agents 405, 406, 407 are deployed at individual QKD nodes. These local RL agents are configured to independently optimize link-specific QKD parameters 415 such as photon emission rates, error correction protocols, and modulation schemes. Each local RL agent continuously adapts these parameters to maximize the key generation rate while minimizing the quantum bit error rate (QBER), thereby tailoring the QKD process to local link conditions.

At the higher level, a global coordinator 410 is configured to supervise and coordinate the activities of the local RL agents. The global coordinator performs 5G and/or 6G-aware optimization using Bayesian optimization with Gaussian processes 420. The global coordinator 410 receives aggregated quantum link values and local performance indicators from the local RL agents and processes this data in combination with network-level information, such as traffic demand, network slice requirements, and mobility predictions.

Specifically, the hierarchical-control-module 122 considers:
- Network slice requirements, prioritizing secure QKD resource allocation to ultra-reliable low latency communication (URLLC) slices (e.g., for autonomous driving), traffic distribution, directing resources toward nodes with increased quantum or classical traffic intensity,
- Mobility prediction data from 6G base stations, allowing for proactive allocation of QKD resources in areas where mobile devices are expected to move, and
- Real-time network status indicators, such as congestion levels, link degradation or rerouting events.

The Bayesian optimization unit 420 employs Gaussian processes to model and learn the relationships between these network-level parameters and QKD performance indicators. It is configured to optimize a composite objective function f(θ) = R, where R is a weighted sum of metrics such as key generation rate, QBER, and resource utilization. The input vector θ includes optimization variables such as quantum key allocation ratios, routing path decisions, and slice-specific QKD priorities. The weighting factors within this function are tunable and can be configured by the network operator to reflect dynamic operational priorities.

Finally, the resource allocation unit 425 distributes QKD resources such as key material and quantum channel usage quotas across the network in accordance with the results produced by the Bayesian optimization. This allocation process ensures that global network demands are met without overloading any individual link or compromising QKD security.

In summary, the hierarchical-control-module 122 forms a two-layer control architecture comprising distributed local RL agents and a global coordination agent. While the local RL agents 405-407 handle link-specific optimization in real time, the global coordinator 410 ensures network-wide QKD efficiency by supervising global objectives through statistical modeling and optimization. This structure supports seamless integration of QKD into highly dynamic and scalable 6G networks.

In the following, a possible training scenario of the hierarchical-control-module 122 is explained:
The hierarchical AI system of the hierarchical-control-module 122 is trained using a two-level architecture based on hierarchical reinforcement learning (HRL). This approach enables efficient learning and optimization at both the local QKD node level and the global network level. The training is performed offline in a simulated environment and may later be refined through online adaptation.

At the local level, each local reinforcement learning (RL) agent 405, 406, 407 can be trained independently to optimize the QKD operational parameters of its corresponding quantum link 112. Training is carried out using a standard deep reinforcement learning algorithm such as Proximal Policy Optimization (PPO). The state space of the local agent includes link-specific measurements such as the quantum bit error rate (QBER), photon detection rate, latency, and signal-to-noise ratio. The action space includes choices to adjust photon emission rate, select between available error correction protocols, and change modulation settings. The reward function maximizes the key generation rate while penalizing high QBER or energy usage.

Training data for the local agents is obtained by simulating variations in link quality under realistic network conditions, including fluctuating loss, noise, and environmental interference. Each local agent learns a policy that selects an optimal action *a* based on the observed link state s.

At the global level, the global coordinator 410 is trained to allocate resources and coordinate optimization across all quantum links 112 in the network. It uses Bayesian optimization 420 with Gaussian processes (GPs) to model the nonlinear relationship between global QKD performance metrics and configuration parameters such as key allocation ratios, slice priority weights, and inter-node routing paths. Training is performed by evaluating different sets of configuration parameters θ in a simulated large-scale network environment and observing a resulting value of a global objective function:
The Gaussian process model is updated iteratively using these evaluation results. The global AI thereby learns to prioritize QKD resources for high-security slices (e.g., URLLC), high-traffic areas, and predicted mobility zones.

To support scalability and privacy, the hierarchical AI can also be trained using federated learning, where local RL agents train their policies independently at distributed QKD nodes and send only model updates (e.g., policy gradients) to the central training coordinator. The coordinator aggregates these updates and refines a global model that guides the global coordinator's behavior.

The self-learning module 124 of the adaptive-QKD node 128 is configured to enable continuous improvement of QKD performance by learning from real-time operational conditions and historical patterns. The initial phase of this process, focuses on collecting sensor-based data and preparing it for integration with the AI models deployed across the network.

In this step, QKD systems are equipped with sensors capable of capturing detailed real-time information about the quantum link 112 and its operational conditions. These sensors include single-photon detectors for monitoring photon detection rates and timing, optical power meters for signal strength analysis, and environmental sensors such as temperature and vibration monitors. Together, these devices provide a multidimensional view of the physical quantum channel 112, enabling the system to detect degradations or anomalies due to environmental fluctuations, hardware instabilities, or interference.

The sensor outputs are integrated into the AI infrastructure of the adaptive-QKD node 128 to generate a continuous and structured stream of data, in particular by providing further training to the dynamic-adaptation-module 116, the threat-detection-module 118, the rerouting-module 120 and/or the hierarchical-control-module 122. Prior to being ingested by the learning algorithms, this raw sensor data undergoes preprocessing, which includes normalization, filtering, and noise suppression. This preprocessing ensures that the data conforms to the input format expected by the self-learning models, and improves convergence and accuracy during training.

To accommodate real-world 5G and/or 6G deployment scenarios, the system architecture considers strategic quantum channel placement based on service-level requirements. Quantum links are selectively installed on critical segments of the telecommunication network 100, including secure fronthaul and backhaul connections, control plane channels, and links associated with high-priority network slices such as ultra-reliable low-latency communication (URLLC). A hybrid cryptographic architecture is adopted, in which classical cryptographic methods are retained for non-critical links, while fallback procedures are implemented to switch from quantum to classical key distribution in case of link failure.

Sensor distribution is optimized to support this hybrid setup. Sensors are deployed at base stations, mobile edge computing (MEC) nodes, and/or centralized network operations centers. This allows for both local and global monitoring of quantum link 112 health, including quantum bit error rate (QBER), photon count statistics, and environmental disturbances. The collected data is also correlated with classical network telemetry to allow holistic threat detection and performance optimization.

From an architectural perspective, distributed QKD nodes can be deployed close to the endpoints of critical links, supporting low-latency key distribution. These nodes are tightly integrated with edge computing infrastructure and managed through software-defined networking (SDN) to allow dynamic control of routing, resource allocation, and fallback mechanisms. For example, in the case of autonomous vehicles, secure communication is established between the vehicle and infrastructure nodes via QKD-enabled base stations. In parallel, less critical channels may use post-quantum classical cryptography to maintain cost-effectiveness.

This first step establishes the physical and logical foundation required for the self-learning module 124 to evolve. It provides the sensing and data ingestion mechanisms necessary for the AI to detect emerging patterns, learn from operational feedback, and adjust QKD operational parameters in real time. The continuous flow of input from a diverse sensor infrastructure supports the goal of making the QKD system adaptive, predictive, and resilient under dynamic 5G and/or 6G network conditions.

The second step in the self-learning process carried out by the self-learning module 124 focuses on the development and deployment of an AI-based prediction and optimization framework. This framework is realized as a hybrid AI architecture comprising both a deep neural network (DNN) and a reinforcement learning (RL) component. As shown in the architecture diagram of Figure 5, these AI capabilities are part of the broader adaptive-QKD node 128 and operate in conjunction with connected components such as sensors 510, QKD hardware 505, and the threat-detection-module 118.

The core of this hybrid AI system is a 5-layer feedforward neural network, implemented using TensorFlow. This DNN is configured to perform predictive inference of QKD operational parameters based on current channel conditions. The input features include quantum bit error rate (QBER), signal-to-noise ratio (SNR), temperature, and vibration data-collected by the sensors 510 and preprocessed as described in Step 1. The network is trained using supervised learning with a backpropagation algorithm. A learning rate of 0.001 and a batch size of 32 are applied during training. Rectified Linear Unit (ReLU) activation functions are used throughout the hidden layers. The DNN outputs predicted values for operational parameters such as the photon emission rate and the most suitable error correction protocol under the current environmental and quantum channel conditions.

To complement the predictive capabilities of the DNN, the system incorporates a Deep Q-Network (DQN) implemented in PyTorch. The DQN supports real-time dynamic adaptation by learning an optimal policy for modifying QKD parameters under changing conditions. The DQN uses an experience replay mechanism with a replay buffer size of 10,000 to retain state-action-reward sequences and stabilize learning. The system is trained using a reward function defined as: $R = Key Generation Rate - λ \times QBER$ where λ is a configurable weighting factor that balances the trade-off between maximizing key throughput and maintaining quantum security. This formulation enables the RL agent to prioritize actions that enhance both performance and robustness of QKD.

The hybrid model is trained using a large-scale dataset comprising over one million simulated QKD channel conditions and adversarial attack scenarios. These training samples capture diverse environmental and network behaviors, including varying levels of noise, temperature shifts, and intentional quantum link interference. The use of both simulated data and real-world sensor input allows the AI to generalize effectively and respond adaptively to unforeseen runtime conditions.

Performance evaluations of the trained model show that it is capable of predicting optimal QKD parameters with a mean absolute error of less than 5%. The integrated anomaly detection mechanisms, which also feed into the threat-detection-module 118, achieve an eavesdropping detection precision of up to 95%. Moreover, the system demonstrates scalable performance in managing multiple quantum links 112 within a 6G network infrastructure, achieving a key distribution rate of up to 1 Gbps.

As depicted in Figure 5, the overall architecture includes components such as QKD hardware 505 (e.g., photon source, single-photon detector, and optical components), a sensor suite 510 that captures relevant environmental and optical data, and the AI system hosted within the adaptive-QKD node 128. The 6G network 100 provides real-time data transport and computation support, including APIs (REST/MQTT), edge computing, and FPGA-based hardware acceleration. The threat-detection-module 118 operates alongside the AI engine to respond to anomalies once detected.

This second step completes the development of a modular, predictive, and learning-capable AI system that allows the self-learning module 124 to dynamically tune QKD operational parameters in real time based on observed and anticipated network and quantum channel conditions.

In the third step of the self-learning procedure, a real-time optimization engine 605 is employed to dynamically control and fine-tune QKD operational parameters based on input provided by the trained AI models of the adaptive-QKD node 128. This optimization engine is responsible for implementing parameter adjustments directly within the QKD hardware based on current system conditions and prediction outputs.

As illustrated in Figure 6, the optimization engine 605 forms an integral part of the QKD control loop, interfacing with various system components including the quantum channel 112, the sensor suite 510, the AI models of the adaptive-QKD node 128, and the threat-detection module 118. The quantum link 112 is continuously monitored to capture transmission properties such as photon arrival rates, error levels, and noise or packet loss characteristics. These values are reported through the sensors 510 and forwarded to the AI system and the optimization engine.

The AI models hosted within the adaptive-QKD node 128 define a control policy that operates over a state-action-reward framework. Based on current observations, the AI selects optimal QKD parameters and forwards them to the optimization engine 605. This engine translates the selected parameters into actionable hardware control instructions that modify the behavior of the quantum link 112. These parameters may include, for example, laser intensity settings, error correction protocol selection, and timing adjustments.

The optimization engine itself is implemented as a lightweight microservice developed using the Flask framework in Python. Communication with the QKD hardware is facilitated via a high-speed gRPC interface. This interface interacts with custom firmware running on QKD components and transmits commands in real time. These commands are applied to underlying hardware blocks such as digital-to-analog converters (DACs), which control the voltage of photon sources, or to software-defined radio (SDR) units responsible for protocol selection. The engine achieves sub-millisecond latency (<1 ms) from prediction to parameter application, ensuring rapid response to evolving link conditions.

For optimization, the engine leverages both Bayesian optimization and gradient descent. Bayesian optimization is performed using the GPy library and relies on a Gaussian kernel to model the objective function, which balances quantum key generation rate, error minimization, and energy efficiency. Gradient descent is employed when the parameter space is continuously differentiable and can be explored efficiently using gradient-based learning.

The feedback loop created by this optimization engine ensures that QKD parameters are adapted continuously and responsively. It complements the AI models' learning and inference with deterministic, hardware-level execution logic. Moreover, this module interfaces with the threat-detection module 118 to update its behavior if anomalies are detected, allowing secure fallback or parameter reassessment if threats are inferred from the sensor data.

As depicted in Figure 6, this component serves as a bridge between high-level decision-making and low-level hardware actuation, enabling the QKD system to self-optimize under varying environmental conditions and adversarial threats.

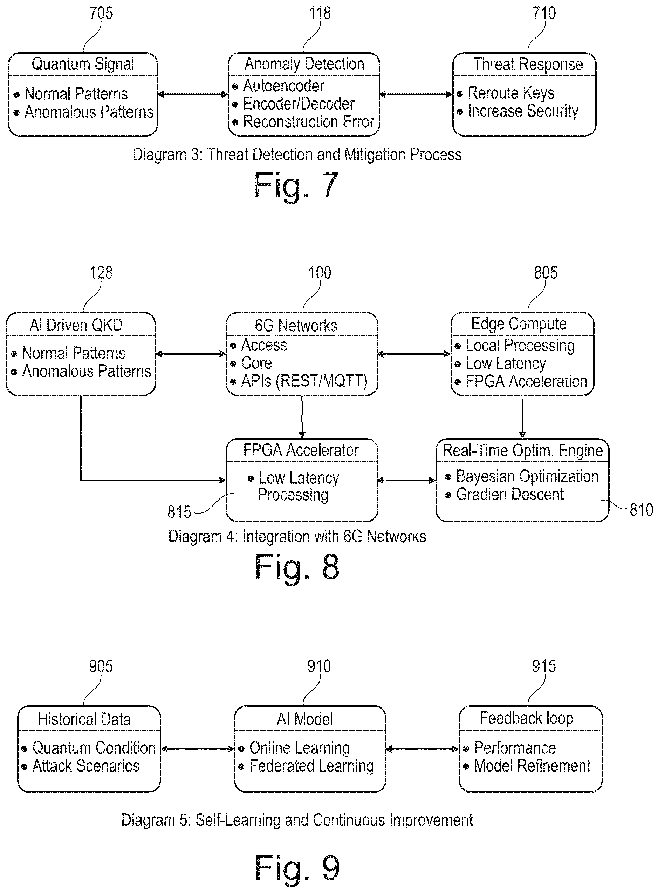

In step 4 of the self-learning procedure, the system incorporates a threat detection and response framework based on real-time analysis of quantum signal characteristics. This component, implemented via the threat-detection-module 118, is designed to autonomously identify anomalies in the quantum key distribution process and initiate appropriate mitigation measures. As illustrated in Figure 7, the process operates on three main stages: input from quantum signals 705, anomaly detection within the threat-detection-module 118, and activation of a threat response 710.

The input to this process comprises quantum signal data 705, including both normal and potentially anomalous transmission patterns observed within the quantum link 112. These patterns are monitored over time using a sliding window approach of 100 samples. The incoming data is processed using a pre-trained autoencoder model deployed within the anomaly detection component of module 118. This autoencoder, developed in Step 2, operates on encoded and decoded representations of the input signal to compute a reconstruction error, which is then used to generate anomaly scores.

Anomaly detection operates at a temporal resolution of 10 milliseconds. Each incoming batch of samples is evaluated for deviations from expected signal behavior. An anomaly is flagged when the computed score exceeds a dynamic threshold. Importantly, this threshold is not static, but rather is continuously updated using a Kalman filter. This filtering approach allows the system to adapt the detection sensitivity in response to changing background noise and other environmental fluctuations, thereby minimizing false positives while ensuring timely detection of genuine attacks.

Upon detection of an anomaly, the threat-detection-module 118 triggers a threat response process 710. This response may involve rerouting of quantum keys or switching to a more secure QKD protocol. Key rerouting is executed via Software-Defined Networking (SDN) using OpenFlow control messages. These rerouting commands are transmitted with a latency of less than 5 milliseconds, allowing quantum key traffic to be quickly redirected through alternative paths in the network that are not affected by the identified threat. The key rerouting is proactively executed via Software-Defined Networking (SDN) using OpenFlow control messages.

Alternatively or additionally, the threat response may include escalation to a more secure QKD protocol, such as switching from BB84 to E91. This is achieved by reconfiguring the QKD hardware's software-defined radio (SDR) subsystem via firmware APIs. These adjustments are performed in real time and do not interrupt the ongoing key exchange processes.

The combination of high-resolution anomaly monitoring, adaptive thresholding, and rapid mitigation through hardware reconfiguration and SDN rerouting enables the system to ensure QKD resilience under adversarial conditions.

Moreover, as part of the broader adaptive-QKD node 128, the threat-detection-module 118 collaborates with the AI model's optimization logic and the self-learning module 124, forming a closed-loop system that continuously improves its detection capabilities based on new observations and prior outcomes.

### Integration with Telecommunication Infrastructure

The AI-based quantum key distribution (QKD) system described herein is designed for seamless integration into a telecommunication network 100, in particular into a 5G or 6G infrastructure. As shown in Fig. 8, the system architecture includes an AI-driven QKD entity 128, which interfaces with the 6G network infrastructure 100, edge computing systems 805, FPGA-based acceleration hardware 815, and a real-time optimization engine 810.

To enable compatibility with existing telecommunication standards, the system uses RESTful APIs based on the 3GPP TS 23.501 standard, ensuring interoperability with 5G/6G core network functions. These APIs expose interfaces for key requests, real-time performance monitoring, and dynamic updates to security policies. For lightweight machine-type or IoT communications, the system also supports MQTT and CoAP protocols, facilitating integration into constrained devices and endpoints.

A key architectural focus lies on low-latency operation, which is ensured through two mechanisms. First, AI models and optimization logic are deployed close to the edge of the network (e.g., base stations or edge compute units 805), enabling local data processing and immediate response to changes in network or quantum link conditions. Second, an FPGA accelerator 815 performs real-time inference and parameter adaptation tasks. It executes model-based decisions with minimal delay by directly interfacing with QKD hardware components via high-speed control signals. The real-time optimization engine 810 applies Bayesian optimization and gradient descent algorithms to calculate optimal QKD parameters based on live inputs.

As part of this architecture, the QKD system is capable of participating in network slicing, mapping its cryptographic operations to specific 5QI (5G Quality Indicator) values. This ensures differentiated handling of security requirements across multiple virtual network slices. Security policies can thereby be tailored and enforced per service type, enabling ultra-reliable low-latency communications (URLLC) or critical infrastructure protection.

Testing and validation of the system is carried out both in simulation and in real-world deployment. Initial testing uses a QKD channel emulator to replicate various network conditions, including noise, link degradation, and attack scenarios. Performance metrics such as key generation rate (R), quantum bit error rate (QBER), and latency are measured using automated scripts and analyzed statistically. Security robustness is evaluated via penetration testing and formal methods. The system is further subjected to field trials within a live 6G testbed comprising 10 QKD nodes and 100 simulated mobile devices. The Mean Time Between Failures (MTBF) is also tracked to assess overall reliability.

As illustrated in Fig. 9, the system employs a continuous improvement loop. A historical data set 905 comprising quantum link conditions and attack scenarios is used to train an AI model 910 using both online learning and federated learning. The model is then continuously refined based on field performance, forming a feedback loop 915 that ensures long-term robustness and adaptability. In federated setups, only model updates (e.g., gradient data) are shared among nodes, preserving data privacy while enabling distributed training.

This adaptive deployment strategy ensures that the system evolves in real-time based on operational experience, making it suitable for long-term integration into 6G infrastructure, including critical communication networks, autonomous transport systems, and future quantum-secure services.

### Example Use Case and Key Innovations

To illustrate the practical utility of the AI-driven QKD system, consider the following use case scenario: In a future 6G telecommunication network 100, autonomous vehicles are engaged in secure data exchange with a centralized traffic management system. This communication requires ultra-reliable and secure links to transmit navigation data, situational awareness, and control signals with minimal latency. However, such networks are susceptible to attacks from adversaries equipped with quantum computing capabilities, which could compromise classical encryption schemes.

To address this, the proposed AI-driven quantum key distribution (QKD) system 128 is deployed across the network infrastructure. The system dynamically generates and distributes quantum encryption keys in real time between the mobile first communication devices 105 (the vehicles) and fixed second communication devices 106 (such as base stations or traffic hubs). Using its integrated threat-detection-module 118, the system monitors quantum link values and quantum signal patterns to detect anomalies that may indicate eavesdropping or interference.

Upon detection of a potential threat-such as abnormal photon polarization patterns or increases in the quantum bit error rate (QBER)-the rerouting-module 120, working in conjunction with the threat-detection-module 118, calculates an alternative communication path. It reroutes the quantum key exchange through more secure quantum links 112 or network slices, without interrupting the ongoing communication. This real-time adaptation ensures uninterrupted secure communication for autonomous vehicles while minimizing latency.

### Some key aspects of the invention are as follows:

Real-Time Adaptation: The system leverages reinforcement learning, anomaly detection, and network metrics to continuously adjust QKD operational parameters such as photon emission rate, routing paths, or error correction protocols. This ensures optimal performance and security under dynamic 6G network conditions, including node mobility and variable noise levels.

FPGA Acceleration: Dedicated FPGA-based hardware 815 is used to accelerate both the real-time optimization and threat detection processes. These FPGAs execute decision logic (e.g., threshold evaluation, path selection) with minimal latency, enabling the system to meet the stringent timing requirements of 6G URLLC (Ultra-Reliable Low-Latency Communication) services.

Scalability for Large-Scale Networks: The system uses hierarchical-control-modules 122 equipped with hierarchical reinforcement learning (HRL) to manage multiple QKD links across the network. By coordinating local and global decision layers, the AI can prioritize key distribution across numerous nodes, optimize resource allocation based on slice-specific requirements, and integrate with network slicing mechanisms.

Self-Learning and Continuous Improvement: The self-learning-module 124 continuously refines the AI models deployed in the system. Through online learning and federated learning, it adapts to evolving channel behaviors, traffic patterns, and attack scenarios. As a result, the system becomes more efficient and accurate over time, improving QKD performance and threat response through experience.

This combination of adaptive, scalable, and hardware-accelerated quantum key management establishes a novel framework for securing critical communications in next-generation mobile networks, especially those involving autonomous systems and infrastructure-critical applications.

### Reference List

- 100: telecommunication network
- 105: first communication device
- 106: second communication device
- 110: monitoring entity
- 112: quantum link, quantum channel
- 114: analytics entity
- 116: dynamic-adaptation-module
- 118: threat-detection-module
- 120: rerouting-module
- 122: hierarchical-control-module
- 124: self-learning module
- 126: integration-module
- 128: Adaptive-QKD node

## Claims

1. A computer-implemented method for performing quantum key distribution, QKD, in a telecommunication network (100) between a first communication device (105) and a second communication device (106), the method comprising:
(a) monitoring, by a monitoring entity (110), quantum link values of a QKD process carried out with a first set of QKD operational parameters;
(b) detecting, by an analytics entity (114), based on the monitored quantum link values, one or more operational conditions selected from: a condition, in particular a degradation, of a quantum link (112), a threat to the QKD, or a mobility event affecting a QKD communication party;
(c) providing, in response to the detected at least one operational condition, at least a subset of the monitored quantum link values to a dynamic-adaptation-module (116), a threat-detection-module (118), a rerouting-module (120), or a hierarchical-control-module (122) one or all of the modules are implemented within an adaptive-QKD node (128);
(d) determining, by one or more of the modules, a second set of QKD operational parameters based on one or more machine learning models trained on quantum link data and at least a subset of the quantum link values as input;
(e) applying, by an operational module configured to interface with QKD hardware, the second set of QKD operational parameters to adjust the QKD process,
wherein the second set of QKD operational parameters enables QKD to be maintained or improved.

2. The method of claim 1, wherein the first set of QKD operational parameters or the second set of QKD operational parameters comprises one or more of: a photon emission rate, an energy setting, an error correction protocol, a security protocol, a routing path, multipath usage, a load balancing setting, or an emission timing or time window adjustment.

3. The method of claim 2, wherein: the photon emission rate is increased in response to a decrease in photon detection rate to maintain a key generation rate; the energy setting is reduced during periods of low traffic to improve energy efficiency; the error correction protocol is changed to a more robust scheme in response to increased quantum bit error rate; the security protocol is switched to a more secure algorithm in response to a threat detection; the routing path is reassigned in response to a degradation of the quantum link (112), in response to a threat detection or to save energy consumption; multipath usage is activated when a security threat is detected to improve resilience or to increase the bandwidth; the load balancing setting is adjusted to redistribute quantum key exchange operations across multiple nodes under high network load; or the emission timing is modified to reduce signal collisions, timing-related errors or to counter threat attacks.

4. The method of claim 3, wherein the reassignment of the routing path comprises one or more of: rearranging the communication nodes, skipping previously used communication nodes, performing mobility-aware routing, or splitting the routing path across multiple quantum links (112).

5. The method of any of the preceding claims, wherein the detection of the at least one operational condition is based on one or more of:
• an increase in quantum bit error rate, latency, or packet loss for detecting a degradation of the quantum link (112);
• an abnormality pattern in polarization states or photon arrival times, in particular wherein the polarization states or photon arrival times are combined with network metrics information, for detecting a threat to the QKD; or
• mobility information derived from GPS data, base station handover signaling, quantum signal timing variations, or historic movement data of the first or the second communication device (106) for detecting a mobility event affecting a QKD communication party.

6. The method of any of the preceding claims, wherein:
• the dynamic-adaptation-module (116) comprises a Dynamic-Adaptation-AI trained on historical quantum link data and is configured to receive as input one or more of a quantum bit error rate, a currently used error correction protocol, latency, a signal-to-noise ratio, or packet loss data, and to output at least a subset of the second set of QKD operational parameters;
• the threat-detection-module (118) comprises an autoencoder and is configured to identify an abnormality pattern based on polarization states, photon arrival times, or network metrics information of the quantum link (112) as input and to output at least a subset of the second set of QKD operational parameters;
• the rerouting-module (120) uses location information of the first communication device (105) or the second communication device (106) as input to a routing table or a trained-routing-AI, wherein a new communication path (112) is obtained from the routing table or the trained-routing-AI as at least a subset of the second set of QKD operational parameters; or
• the hierarchical-control-module (122) of the adaptive-QKD node (128) receives as input to its trained hierarchical-AI the measured quantum link values or the second set of QKD operational parameters of at least two network nodes and outputs a hierarchical-optimized second set of QKD operational parameters.

7. The method of any of the preceding claims, wherein the threat-detection-module (118):
• uses a Deep Q-Network, DQN, to dynamically adjust a reconstruction error threshold of the autoencoder in real time based on one or more of:
∘ network traffic load,
∘ environmental noise affecting the quantum link (112), or
∘ attack severity learned from a federated threat database; or
• is trained using federated learning across multiple edge nodes of the telecommunication network (100) such that localized attack patterns are learned without transmitting raw quantum link data between the nodes.

8. The method of any of the preceding claims, wherein a respective AI of one or more of the dynamic-adaptation-module (116), the threat-detection-module (118), the rerouting-module (120), or the hierarchical-control-module (122):
• is improved over time through self-learning based on historical data to predict and prevent potential performance degradations of the QKD process; or
• is updated during operation using online learning based on new quantum link data obtained from the field; or
• is trained across multiple nodes of the telecommunication network (100) using federated learning without sharing raw quantum link data between the nodes.

9. The method of any of the preceding claims, wherein:
• distributed QKD nodes are deployed near the first communication device (105) or the second communication device (106), in particular implemented within base stations of the telecommunication network (100); or
• sensors for measuring the quantum link values are implemented near the communication endpoints, in particular within the base stations.

10. The method of any of the preceding claims, wherein the adaptive-QKD node (128) comprises FPGA-based hardware configured to accelerate real-time processing of AI models for determining the second set of QKD operational parameters.

11. The method of preceding claims, wherein parts of the telecommunication network (100) are classified into a secure-stable-part and an unsecure-unstable-part, and the measuring or monitoring of the unsecure-unstable-part is performed at a higher frequency than the measuring or monitoring of the secure-stable-part.

12. An adaptive-QKD node (128) configured to perform the method of any one of claims 1 to 11, the device comprising:
• a monitoring entity (110) configured to receive or to monitor quantum link values;
• an analytics entity (114) configured to detect one or more operational conditions based on the monitored quantum link values;
• a dynamic-adaptation-module (116), a threat-detection-module (118), a rerouting-module (120), or a hierarchical-control-module (122), each configured to determine at least a subset of a second set of QKD operational parameters in response to the detected operational condition(s); and
• an operational module configured to apply the second set of QKD operational parameters to adjust a QKD process or to signal the second set of QKD operational parameters to the telecommunication network (100).

13. The adaptive-QKD node (128) of claim 12, wherein the adaptive-QKD node (128) is a base station of the telecommunication network (100).

14. A telecommunication network (100) for performing quantum key distribution, QKD, wherein the system being configured to execute the method according to any of claims 1 to 11.

15. A computer program product comprising instructions which, when executed by the adaptive-QKD node (128) according to claim 12 or the telecommunication network (100) according to claim 14, cause the method of any one of claims 1 to 11 to be performed.
